# EUROPEAN PATENT APPLICATION

(11) **EP 4 806 808 A1**
(43) Date of publication of application: **16.09.2026**
(21) Application number: 24887996.7
(22) Date of filing: 06.11.2024
(51) Int. Cl.: B65G 1/04

(54) **WAREHOUSING SYSTEM**

(30) Priority: 09.11.2023 CN 202311489972
(71) Applicant: Beijing Geekplus Technology Co. Ltd, Beijing 100102 (CN)
(72) Inventor: LI, Hongbo, Beijing 100102 (CN)
(74) Representative: De Sandre, Emanuele
(86) International application number: PCT/CN2024/130205
(87) International publication number: WO 2025/098385

(57) **Abstract**

The present disclosure relates to the field of intelligent warehousing, and discloses a warehousing system, comprising an inbound area, an outbound area, an inventory area, and transport devices. The inbound area comprises at least one inbound workstation and at least one first conveyor line, the inbound workstation is configured to sort target objects for inbound and place same onto the corresponding first conveyor line, and the first conveyor line is configured to convey the target objects sorted by the inbound workstation. The outbound area comprises at least one outbound workstation and at least one second conveyor line, the second conveyor line is configured to convey target objects for outbound to the outbound workstation, and the outbound workstation is configured to sort the target objects. The inventory area is used for placing target objects. The transport devices are configured to transport the target objects conveyed by the first conveyor line to the inventory area, or to transport the target objects in the inventory area to the second conveyor line.

## Description

### CROSS-REFERENCE TO RELATED APPLICATION

This application claims the priority of Chinese Patent Publication No. 202311489972.7 filed on November 09, 2023, the entire contents of which are incorporated by reference into this application.

### FIELD

The present disclosure relates to the field of intelligent warehousing, and in particular to a warehousing system.

### BACKGROUND

A warehousing system may intelligently manage and execute logistics activities such as inbound, outbound, storage, sorting, and distribution of target objects, to reduce heavy manual labor. Generally, a warehousing system includes a cargo storage area, workstations, and a transport device. The transport device is configured to move between the cargo storage area and the workstations to transport cargo.

### SUMMARY

Embodiments of the present disclosure provide a warehousing system, including:
an inbound area including at least one inbound workstation and at least one first conveyor line, each first conveyor line being docked with a side of one or more inbound workstations, in which each inbound workstation is configured to pick a target object to be inbound to one or more corresponding first conveyor lines, and each first conveyor line is configured to convey the target object picked by one or more corresponding inbound workstations, to inbound the target object;
an outbound area including at least one outbound workstation and at least one second conveyor line, each second conveyor line being docked with a side of one or more outbound workstations, in which each second conveyor line is configured to convey a target object to be outbound to one or more corresponding outbound workstations, and each outbound workstation is configured to pick the target object for outbound;
an inventory area configured to place a carrier, in which the carrier includes a placement position configured to place the target object; and
a transport device configured to transport the target object conveyed by the at least one first conveyor line and/or the carrier carrying the target object to the inventory area, or transport the target object in the inventory area and/or the carrier carrying the target object to the at least one second conveyor line.

In the above embodiments, the inbound area further includes at least one third conveyor line; and
each third conveyor line is docked with another side of one or more inbound workstations, and each third conveyor line is configured to convey the target object to be inbound to one or more corresponding inbound workstations for picking and inbound.

In the above embodiments, the outbound area further includes at least one fourth conveyor line; and
each fourth conveyor line is docked with another side of one or more outbound workstations, and each fourth conveyor line is configured to convey the target object picked by one or more corresponding outbound workstations, to outbound the target object.

In the above embodiments, the transport device is further configured to transport the target object conveyed by the at least one first conveyor line to a carrier having an idle placement position in the inventory area, or to a first target carrier in the inventory area; in which the first target carrier stores a cargo having the same attribute as the target object.

In the above embodiments, the transport device is further configured to transport a target object having a cargo popularity greater than or equal to a first popularity threshold to a second target carrier in the inventory area; in which the second target carrier is any carrier in the inventory area.

In the above embodiments, the transport device is further configured to transport a target object having a higher cargo popularity to a carrier closer to the outbound area, or transport a target object having a cargo popularity greater than or equal to a second popularity threshold to a third target carrier in the inventory area; in which a distance between the third target carrier and the outbound area is less than or equal to a first preset distance.

In the above embodiments, the transport device is further configured to transport a carrier in the inventory area, transport a carrier having a higher carrier popularity to a storage position closer to the outbound area, or transport a carrier having a carrier popularity greater than or equal to a third popularity threshold to a first target area in the inventory area; in which a distance between the first target area and the outbound area is less than or equal to a second preset distance.

In the above embodiments, the transport device is further configured to transport a carrier in the inventory area, transport a carrier having a higher carrier popularity to a storage position closer to the inbound area, or transport a carrier having a carrier popularity greater than or equal to a fourth popularity threshold to a second target area in the inventory area; in which a distance between the second target area and the inbound area is less than or equal to a third preset distance.

In the above embodiments, the transport device is further configured to, based on at least one preset time period, transport a target object corresponding to each preset time period in the inventory area to a fourth target carrier in the inventory area, or transport a fifth target carrier corresponding to each preset time period in the inventory area to a third target area in the inventory area; in which a distance between the fourth target carrier and the outbound area is less than or equal to a third preset distance, and a distance between the third target area and the outbound area is less than or equal to a fourth preset distance.

In the above embodiments, the transport device is further configured to transport a carrier having a number of idle placement positions less than or equal to a preset threshold in the inventory area, and transport a carrier having a smaller number of idle placement positions to a storage position closer to the outbound area.

In the above embodiments, each inbound workstation includes at least one inbound buffer position; and
each inbound workstation is configured to temporarily store the target object in one or more inbound buffer positions, and in a case where the target object in the one or more inbound buffer positions satisfies a preset condition, inbound the target object temporarily stored on the one or more inbound buffer positions.

In the above embodiments, each outbound workstation includes at least one outbound buffer position; and
each outbound workstation is configured to temporarily store the target object in one or more outbound buffer positions, and in a case where the target object in the one or more outbound buffer positions satisfies a preset condition, outbound the target object temporarily stored on the one or more outbound buffer positions.

In the above embodiments, the preset condition includes that a number of target objects having the same attribute among the target objects is greater than or equal to a preset number, or that the target object matches a target object required by an order.

In the above embodiments, the warehousing system further includes: a first information identifying device arranged on a target workstation or on one or more second conveyor lines or on one or more third conveyor lines;
the first information identifying device is configured to detect information of the target object; the target workstation includes an inbound workstation and/or an outbound workstation; and
the target workstation is configured to, according to the information of the target object, pick the target object to be inbound to one or more corresponding first conveyor lines, or pick the target object to be outbound to one or more corresponding fourth conveyor lines.

In the above embodiments, conveyor lines are arranged at a same height, or are arranged in a stagger manner at different heights; the conveyor lines include at least one of the first conveyor line, the second conveyor line, the third conveyor line, or the fourth conveyor line.

In the above embodiments, the warehousing system further includes: a second information identifying device arranged on the transport device;
the second information identifying device is configured to detect information of the target object; and
the transport device is configured to, according to the information of the target object, transport the target object to a target placement position in the inventory area.

In the above embodiments, the warehousing system further includes:
at least one first buffer area, in which the first buffer area is arranged between the inbound area and the inventory area, and the first buffer area is configured to place a carrier not carrying the target object.

In the above embodiments, the warehousing system further includes:
at least one second buffer area, in which the second buffer area is arranged between the inventory area and the outbound area, and the second buffer area is configured to place a carrier having a carrier popularity greater than or equal to a third popularity threshold, and/or place a carrier having no idle placement position.

In the above embodiments, the inbound area and the outbound area are oppositely arranged on two sides of the inventory area, or the inbound area and the outbound area are respectively arranged in different areas on a same side of the inventory area.

### BRIEF DESCRIPTION OF THE DRAWINGS

To more clearly describe the technical solutions in embodiments of the present disclosure, the following briefly introduces the drawings required for the embodiments. Apparently, the drawings in the following description are merely some embodiments of the present disclosure. For those of ordinary skill in the art, other drawings may be obtained based on these drawings without creative effort.
FIG. 1 is a schematic diagram of a warehousing system according to an embodiment of the present disclosure;
FIG. 2 is a schematic diagram of another warehousing system according to an embodiment of the present disclosure;
FIG. 3 is a schematic structural diagram of a workstation according to an embodiment of the present disclosure;
FIG. 4 is a schematic diagram of yet another warehousing system according to an embodiment of the present disclosure;
FIG. 5 is a schematic diagram of yet another warehousing system according to an embodiment of the present disclosure;
FIG. 6 is a schematic diagram of yet another warehousing system according to an embodiment of the present disclosure;
FIG. 7 is a schematic diagram of an inbound area according to an embodiment of the present disclosure;
FIG. 8 is a schematic diagram of another inbound area according to an embodiment of the present disclosure;
FIG. 9 is a schematic diagram of yet another warehousing system according to an embodiment of the present disclosure; and
FIG. 10 is a schematic diagram of yet another warehousing system according to an embodiment of the present disclosure.

### DETAILED DESCRIPTION OF THE DISCLOSURE

To enable those skilled in the art to better understand the technical solutions in embodiments of the present disclosure and make the above objects, features, and advantages of embodiments of the present disclosure more apparent, the technical solutions in embodiments of the present disclosure are further described in detail below with reference to the accompanying drawings.

A warehousing system may intelligently manage and execute logistics activities such as inbound, outbound, storage, sorting, and distribution of target objects, to reduce heavy manual labor. Generally, a warehousing system includes a cargo storage area, workstations, and a transport device. The transport device is configured to move between the cargo storage area and the workstations to transport cargo. The transport efficiency of the transport device is affected by the layout of movement routes in the warehousing system. If the layout of movement routes in the warehousing system is unreasonable, the inbound and outbound efficiency of cargo may be affected.

Based on this, embodiments of the present disclosure provide a warehousing system. The warehousing system may convey target objects via conveyor lines, and the transmission of conveyor lines is not affected by the layout of movement routes in the warehousing system. This may reduce the movement range of the transport device and reduce the correlation between the layout of movement routes in the warehousing system and the inbound/outbound efficiency. Thus, the inbound and outbound efficiency of cargo may be improved.

The warehousing system provided by embodiments of the present disclosure is described below with reference to the accompanying drawings.

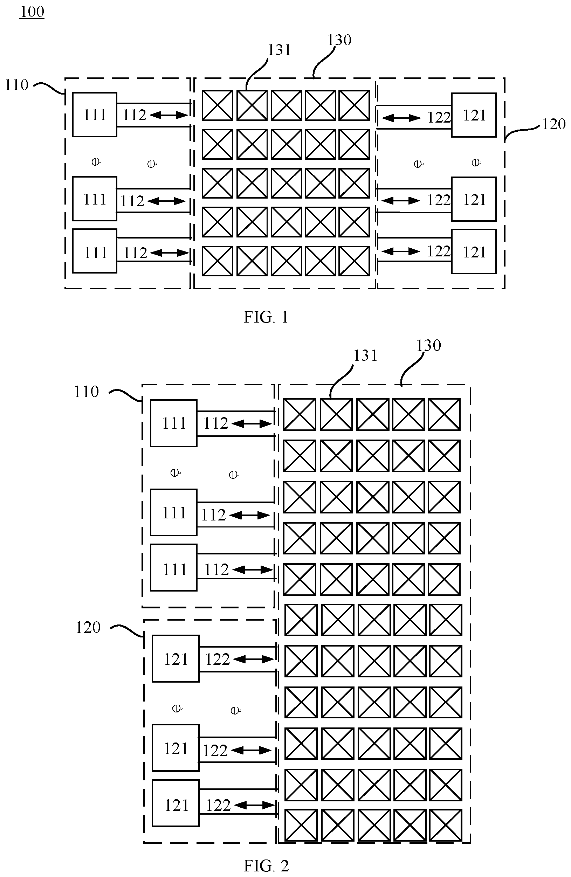

FIG. 1 is a schematic diagram of a warehousing system according to an embodiment of the present disclosure. As shown in FIG. 1, an embodiment of the present disclosure provides a warehousing system 100, including an inbound area 110, an outbound area 120, an inventory area 130, and a transport device (not shown in FIG. 1).

In some embodiments, the inbound area 110 includes at least one inbound workstation 111 and at least one first conveyor line 112, each first conveyor line 112 being docked with a side of one or more inbound workstations 111. Each inbound workstation 111 is configured to pick a target object to be inbound to one or more corresponding first conveyor lines 112, and each first conveyor line 112 is configured to convey the target object picked by one or more corresponding inbound workstations 111, to inbound the target object. The outbound area 120 includes at least one outbound workstation 121 and at least one second conveyor line 122, each second conveyor line 122 being docked with a side of one or more outbound workstations 121. Each second conveyor line 122 is configured to convey a target object to be outbound to one or more corresponding outbound workstations 121, and each outbound workstation 121 is configured to pick the target object for outbound. The inventory area 130 is configured to place a carrier 131. The carrier 131 includes a placement position configured to place the target object. The transport device is configured to transport the target object conveyed by the at least one first conveyor line 112 and/or the carrier carrying the target object to the inventory area 130, or transport the target object in the inventory area 130 and/or the carrier carrying the target object to the at least one second conveyor line 122.

It should be noted that, in embodiments of the present disclosure, picking may refer to a workstation picking a target object from a carrier 131 according to order information and conveying the target object via the conveyor line. For example, an inbound workstation 111 may pick a target object from a carrier 131 and place them on a conveyor line for conveyance.

In some embodiments, a target object may include a cargo in an order to be processed, a container containing the cargo, a bin containing the cargo, or an original box containing the cargo, which is not limited in embodiments of the present disclosure. The following embodiments take the target object as a bin containing cargo for illustrative description.

In some embodiments, the carrier 131 may be a shelf. To facilitate the transport device to transport the carrier 131, the carrier 131 may be a movable shelf. The movable shelf includes at least one layer of partition plate, which divides the movable shelf into at least two layers. The partition plate of the carrier 131 has at least one placement position, and each placement position may receive at least one target object, which is not limited in embodiments of the present application. It should be noted that the carrier 131 includes but is not limited to a partition shelf, a container shelf, a picking shelf, a movable shelf, a buffer shelf, etc. The carrier 131 provided in embodiments of the present disclosure may refer to any carrier used to place target objects.

In some embodiments, each placement position on the carrier 131 may be a rectangular parallelepiped receiving space, and the placement positions on the carrier 131 may be neatly arranged along the length direction, width direction, and height direction of the carrier 131. The container may be a supporting product specifically designed for the placement position, or an ordinary cargo box (also called a bin), or the packaging of the cargo (also called an original box), which is not limited in embodiments of the present disclosure.

In some embodiments, the transport device may be a transport robot, such as an automated guided vehicle (AGV). For example, the transport robot may move to the first conveyor line 112, receive the target object output by the first conveyor line 112, and move while carrying the target object.

It should be noted that, during inbound, the target object is first transported to the inbound area 110, and the inbound workstation 111 picks the target object to be inbound to the first conveyor line 112. Then, the first conveyor line 112 conveys the target object to the inventory area 130 so that the transport device may obtain the target object at the output port of the first conveyor line 112. Finally, the transport device transports the target object to the inventory area 130 and places the target object in an idle placement position on a carrier 131, or the transport device transports a carrier 131 having an idle placement position to the output port of the first conveyor line 112 to place the target object on the carrier 131.

In some embodiments, a workstation (e.g., an inbound workstation 111) may be arranged at the output port of the first conveyor line 112. Thus, after the first conveyor line 112 conveys the target object to the output port, the workstation arranged at the output port of the first conveyor line 112 may place the target object in an idle placement position of a carrier 131, and then the transport device transports the carrier 131 carrying the target object to the inventory area 130. In other embodiments, after the first conveyor line 112 conveys the target object to the output port, the workstation arranged at the output port of the first conveyor line 112 may also place the target object on the transport device, and the transport device transports the target object to the inventory area 130 and places it on a carrier 131 in the inventory area 130.

During outbound, the transport device obtains the target object to be outbound in the inventory area 130. Then, the transport device transports the target object or the carrier 131 carrying the target object to the input port of the second conveyor line 122 in the outbound area 120, and places the target object on the second conveyor line 122. The second conveyor line 122 conveys the target object to the outbound area 120, and the outbound workstation 121 picks the target object for outbound.

In some embodiments, a workstation (e.g., an outbound workstation 121) may be arranged at the input port of the second conveyor line 122. Thus, after the second conveyor line 122 conveys the target object to the inventory area 130, a device arranged at the input port of the second conveyor line 122 may pick the target object from the transport device onto the second conveyor line 122, or pick the target object from the carrier 131 transported by the transport device onto the second conveyor line 122.

In some embodiments, the transport device may transport the carrier 131 or the target object, which is not limited in embodiments of the present disclosure. The structure and performance of a transport device that transports the carrier 131 and a transport device that transports target objects may be different.

For example, the transport device includes a transport device 1 and a transport device 2; the transport device 1 is configured to transport the carrier 131, and the transport device 2 is configured to transport the target object. For example, the transport device 1 may transport the carrier 131 to the output port of the first conveyor line 112, and the workstation or the transport device 2 arranged at the output port of the first conveyor line 112 places the target object in an idle placement position on the carrier 131; then, the transport device 1 transports the carrier 131 carrying the target object to the inventory area 130. Alternatively, the transport device 1 may transport the carrier 131 to the inventory area 130, and the transport device 2 transports the target object to the carrier 131 and places it in an idle placement position on the carrier 131.

In some embodiments, when the transport device is configured to transport the target object, the transport device may transport one target object or multiple target objects, which is not limited in embodiments of the present disclosure.

For example, when the transport device transports multiple target objects, the transport device may sequentially place each target object on a target placement position according to a distance between each target object and the target placement position. For example, the shorter the distance between the target object and the target placement position, the earlier the transport device places the target object on the corresponding target placement position. It should be noted that the structure and performance of a transport device that transports one target object and a transport device that transports multiple target objects may be different, which is not limited in the present disclosure.

Based on the schematic diagram of a warehousing system shown in FIG. 1, in some embodiments, the inbound area 110 and the outbound area 120 are oppositely arranged on two sides of the inventory area 130.

FIG. 2 shows a schematic diagram of another warehousing system. As shown in FIG. 2, in some embodiments, the inbound area 110 and the outbound area 120 are respectively arranged in different areas on a same side of the inventory area 130. The inbound area 110 may be adjacent to the outbound area 120, which is not limited in embodiments of the present application.

It may be understood that arranging the inbound area 110 and the outbound area 120 in different areas allows the inbound workstation 111 in the inbound area 110 and the outbound workstation 121 in the outbound area 120 to be respectively arranged in different areas. Thus, the movement route for the transport device to transport the target object to be inbound to the inbound area 110 and the movement route for the transport device to transport the target object to be outbound to the second conveyor line 122 may not easily cross or overlap. This may improve the transport efficiency of the transport device, improving the inbound and outbound efficiency of cargo.

In some embodiments, the number of inbound workstations 111 in the warehousing system may be one or multiple, and the number of outbound workstations 121 may be one or multiple, which is not limited in embodiments of the present disclosure. The following embodiments take the inbound area 110 including multiple inbound workstations 111 and the outbound area 120 including multiple outbound workstations 121 as an example for illustrative description.

To further improve inbound efficiency, in some embodiments, the inbound workstation 111 includes at least one inbound buffer position (not shown in the figures). Each inbound workstation 111 is configured to temporarily store the target object in one or more inbound buffer positions, and in a case where the target object in the one or more inbound buffer positions satisfies a preset condition, inbound the target object temporarily stored on the one or more inbound buffer positions. The preset condition includes that a number of target objects having the same attribute among the target objects is greater than or equal to a preset number, or that the target object matches a target object required by an order.

For example, during inbound, the inbound workstation 111 picks target objects to be inbound to temporarily store target objects having the same attribute in an inbound buffer position. When the number of target objects having the same attribute in the inbound buffer position is greater than or equal to the preset number, the target objects on the inbound buffer position are placed on the first conveyor line 112 for inbound.

In some embodiments, the outbound workstation 121 includes at least one outbound buffer position (not shown in the figures). Each outbound workstation 121 is configured to temporarily store the target object in one or more outbound buffer positions, and in a case where the target object in the one or more outbound buffer positions satisfies a preset condition, outbound the target object temporarily stored on the one or more outbound buffer positions. The preset condition includes that a number of target objects having the same attribute among the target objects is greater than or equal to a preset number, or that the target object matches a target object required by an order.

For example, during outbound, the outbound workstation 121 picks target objects to be outbound to temporarily store target objects matching a target object required by an order in an outbound buffer position. When the target objects on the outbound buffer position match the target object required by the order, the target objects on the outbound buffer position are outbound.

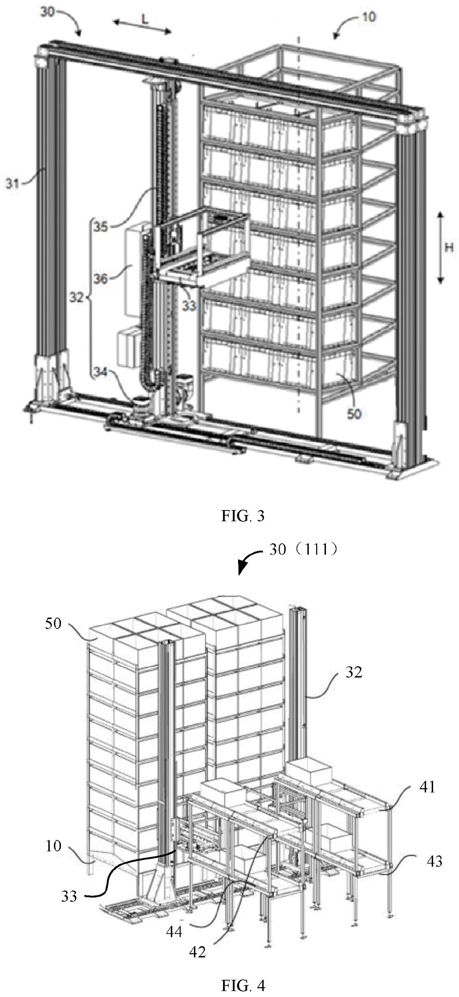

FIG. 3 is a schematic structural diagram of a workstation according to an embodiment of the present disclosure. As shown in FIG. 3, a workstation 30 (e.g., an inbound workstation 111, an outbound workstation 121) includes a support frame 31, a guide mechanism 32, a container pick-and-place device 33, and buffer positions (not shown in FIG. 3). The inbound buffer position and the outbound buffer position are both buffer positions.

In some embodiments, the buffer positions may be arranged on the support frame 31 or the guide mechanism 32.

For example, the guide mechanism 32 is arranged on the support frame 31. The guide mechanism 32 is movable laterally and vertically relative to the support frame 31. The container pick-and-place device 33 is arranged on the guide mechanism 32, so that the container pick-and-place device 33 may move laterally and/or vertically relative to the support frame 31.

In some embodiments, the container pick-and-place device 33 is coupled to a control device. The container pick-and-place device may also be called a cargo handling device or a cargo handling apparatus. When the workstation 30 picks target objects, the container pick-and-place device 33 moves laterally (e.g., direction L) and/or vertically (e.g., direction H) to reach a target position, and takes a bin 50 (also called a "target object") from a movable shelf 10 (also called a "carrier").

For example, the guide mechanism 32 includes a lateral movement device 34, a movement rod 35, and a vertical movement device 36. The lateral movement device 34 is arranged on the support frame 31. The lateral movement device 34 is coupled to the control device. The lateral movement device 34 is movable laterally relative to the support frame 31. The movement rod 35 extends in the vertical direction. The movement rod 35 is arranged on the lateral movement device 34, so that the movement rod 35 is movable laterally relative to the support frame 31. The vertical movement device 36 is arranged on the movement rod 35. The vertical movement device 36 is coupled to the control device. The vertical movement device 36 is movable vertically relative to the movement rod 35. The container pick-and-place device 33 is arranged on the vertical movement device 36, so that the container pick-and-place device 33 is movable vertically relative to the movement rod 35. Therefore, the container pick-and-place device 33 may move laterally and vertically on the support frame 31. The buffer positions are also configured to place bins 50. Therefore, the container pick-and-place device 33 may move bins 50 between the conveyor lines and the buffer positions.

In some examples, the workstation 30 may not include the support frame 31. When the workstation 30 does not include the support frame 31, the container pick-and-place device 33 may move laterally and/or vertically via the guide mechanism 32.

In some embodiments, when the workstation 30 does not include the support frame 31, the workstation 30 may include at least one guide mechanism 32 and a container pick-and-place device 33. The container pick-and-place device 33 is arranged on the guide mechanism 32, and the container pick-and-place device 33 may move laterally and/or vertically via the guide mechanism 32.

In some embodiments, the lateral movement device is connected to the movement rod and is configured to drive the movement rod to move laterally; the movement rod extends in the vertical direction, the container pick-and-place device 33 is arranged on the movement rod, so that the movement rod drives the container pick-and-place device 33 to move laterally; and the vertical movement device is connected to the container pick-and-place device 33 and is configured to drive the container pick-and-place device 33 to move vertically relative to the movement rod.

In some examples, the lateral movement device may be arranged on the movement rod or on the container pick-and-place device 33; the vertical movement device may be arranged on the movement rod. For example, the lateral movement device and the vertical movement device may be two driving motors. Embodiments of the present disclosure do not limit the specific positions of the lateral movement device and the vertical movement device, as long as the lateral movement device may drive the movement rod to move laterally and the vertical movement device may drive the container pick-and-place device 33 to move vertically relative to the movement rod.

In some examples, the guide mechanism 32 may be a robotic arm (also called an automated robotic arm), and the container pick-and-place device 33 may be connected to the robotic arm. The container pick-and-place device 33 may move laterally and/or vertically via the robotic arm (for example, the robotic arm may move the container pick-and-place device 33 laterally and/or vertically). The robotic arm may be fixed to the ground or a guide rail, for example, the robotic arm may be permanently fixed to the ground or a guide rail, or temporarily fixed to the ground or a guide rail, which is not limited in embodiments of the present disclosure.

FIG. 4 is a schematic diagram of yet another warehousing system according to an embodiment of the present disclosure. The workstation 30 in FIG. 4 does not include a support frame. As shown in FIG. 4, the workstation 30 is docked with a plurality of conveyor lines. The container pick-and-place device 33 is configured to pick a target object according to a picking instruction sent by a control device, and place the target object on a conveyor line; the conveyor line is configured to convey the target object for inbound or outbound. The workstation 30 may be an inbound workstation 111 or an outbound workstation 121, which is not limited in embodiments of the present disclosure. The following embodiments take the workstation 30 as an inbound workstation 111 for illustrative description.

In some embodiments, because the workstation 30 is an inbound workstation 111, the plurality of conveyor lines docked with the workstation 30 are first conveyor lines 112. At this time, the container pick-and-place device 33 picking the target object includes: the container pick-and-place device 33 picks a bin 50 containing cargo, a container containing cargo, the cargo itself, or an original box containing cargo from the movable shelf 10. Therefore, the first conveyor line 112 conveying the target object may also include: the first conveyor line 112 conveys the bin 50, the container, the cargo, or the original box containing the cargo. This is not limited in embodiments of the present disclosure. The following embodiments take the first conveyor line 112 conveying a bin 50 (also called a "target object") containing cargo as an example for illustrative description.

For example, one end (e.g., a first end) of the first conveyor line 112 is docked with the container pick-and-place device 33, and the other end (e.g., a second end) of the first conveyor line 112 is docked with an inbound station arranged in the inventory area 130 (not shown in FIG. 4). For example, the first end of the first conveyor line 112 is arranged near the container pick-and-place device 33, so that the container pick-and-place device 33 may place the bin 50 on the first conveyor line 112.

It should be noted that if the plurality of conveyor lines are second conveyor lines 122 (not shown in FIG. 4), then one end (e.g., a first end) of a second conveyor line 122 is docked with an outbound station arranged in the inventory area 130, and the other end (e.g., a second end) of the second conveyor line 122 is docked with the container pick-and-place device 33. For example, the container pick-and-place device 33 takes the bin 50 from the second conveyor line 122 and picks the bin 50 for outbound.

In some embodiments, the conveying direction of a conveyor line (e.g., the first conveyor line 112) may be set according to requirements, and the conveying direction of the conveyor line may be fixed or adjustable, which is not limited in embodiments of the present disclosure.

In some embodiments, the conveying directions of the first conveyor line 112 and the second conveyor line 122 may include a plurality of directions.

For example, the plurality of directions include a first direction and a second direction. For example, when the conveying direction of the first conveyor line 112 is the first direction, the first conveyor line 112 may convey the bin 50 from the container pick-and-place device 33 to the inventory area 130, achieving inbound of cargo in the container; when the conveying direction of the first conveyor line 112 is the second direction, the first conveyor line 112 may convey the bin 50 to a target area of the inbound workstation 111, so that the container pick-and-place device 103 may pick the bin 50, achieving outbound of cargo in the container. When the conveying direction of the second conveyor line 122 is the first direction, the second conveyor line 122 may convey the bin 50 to a target area of the outbound workstation 121, so that the container pick-and-place device 33 may pick the bin 50, achieving outbound of cargo in the container; when the conveying direction of the first conveyor line 112 is the second direction, the second conveyor line 122 may convey the bin 50 from the container pick-and-place device 33 to the inventory area 130, achieving inbound of cargo in the bin 50.

In some embodiments, the workstation 30 (e.g., the inbound workstation 111) may adjust the conveying direction of the conveyor line according to a direction adjustment instruction sent by the control device, or the workstation 30 may automatically adjust the conveying direction in different time periods, which is not limited in embodiments of the present disclosure.

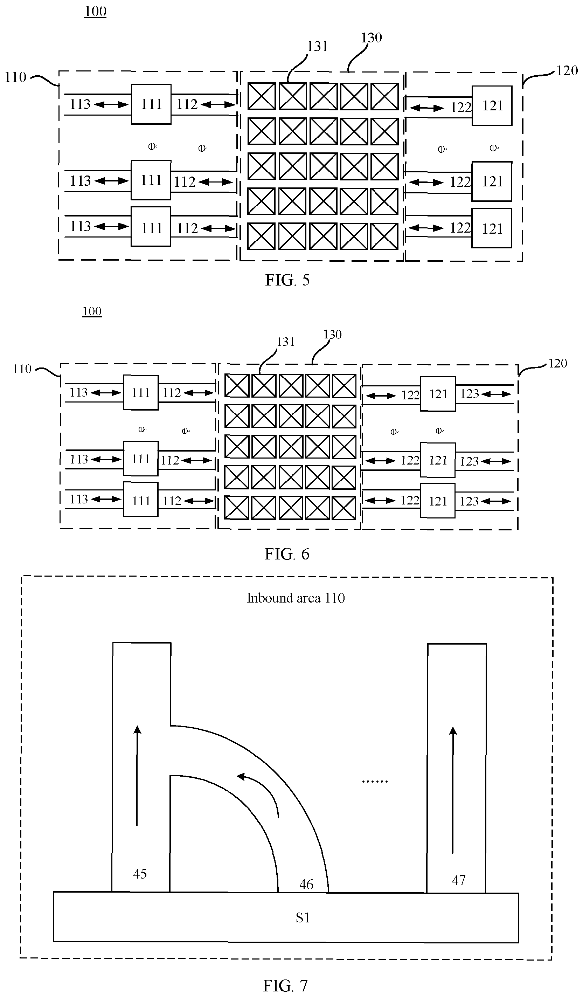

As shown in FIG. 5, in some embodiments, the inbound area 110 further includes at least one third conveyor line 113; each third conveyor line 113 is docked with another side of one or more inbound workstations 111, and each third conveyor line 113 is configured to convey the target object to be inbound to one or more corresponding inbound workstations 111 for picking and inbound.

For example, the third conveyor line 113 is docked with another side of an inbound workstation 111, i.e., the third conveyor line 113 and the first conveyor line 112 are oppositely arranged on two sides of the inbound workstation 111. During inbound, the target object is first placed on the third conveyor line 113, and the third conveyor line 113 inputs the cargo into the inbound workstation 111 in the inbound area 110. Then, the inbound workstation 111 picks the target object to be inbound to the first conveyor line 112, and the first conveyor line 112 conveys the target object to the inventory area 130, so that the transport device may obtain the target object at the output port of the first conveyor line 112. Finally, the transport device transports the target object to the inventory area 130 to place the target object in an idle placement position on a carrier 131. During outbound, the transport device obtains the target object to be outbound in the inventory area 130. Then, the transport device transports the target object to the input port of the second conveyor line 122 in the outbound area 120, and places the target object on the second conveyor line 122. The second conveyor line 122 conveys the target object to the outbound area 120, and the outbound workstation 121 picks the target object for outbound.

It may be understood that conveying the target object to the inbound workstation 111 of the inbound area 110 via the third conveyor line 113 does not require manual transport of the target object, saving labor costs. Moreover, it does not require the transport device to transport the target object, which further reduces the movement range of the transport device and reduces the correlation between the layout of movement routes in the warehousing system and the inbound/outbound efficiency. Thus, the inbound and outbound efficiency of cargo may be further improved.

As shown in FIG. 6, in some embodiments, the outbound area 120 further includes at least one fourth conveyor line 123; each fourth conveyor line 123 is docked with another side of one or more outbound workstations 121, and the each conveyor line 123 is configured to convey the target object picked by one or more corresponding outbound workstations 121, to outbound the target object.

For example, the fourth conveyor line 123 is docked with another side of an outbound workstation 121, i.e., the fourth conveyor line 123 and the second conveyor line 122 are oppositely arranged on two sides of the outbound workstation 121. During inbound, the inbound workstation 111 first picks the target object to be inbound to the first conveyor line 112, and the first conveyor line 112 conveys the target object to the inventory area 130, so that the transport device may obtain the target object at the output port of the first conveyor line 112. Finally, the transport device transports the target object to the inventory area 130 to place the target object in an idle placement position on a carrier 131. The target object to be inbound may be transported to the inbound workstation 111 via the third conveyor line 113 arranged on the side of the inbound workstation 111 away from the first conveyor line 112 (as shown in FIG. 6), or may be transported to the inbound workstation 111 by the transport device or a worker, which is not limited in embodiments of the present disclosure. During outbound, the transport device obtains the target object to be outbound in the inventory area 130. Then, the transport device transports the target object to the input port of the second conveyor line 122 in the outbound area 120, and places the target object on the second conveyor line 122. The second conveyor line 122 conveys the target object to the outbound area 120, and the outbound workstation 121 picks the target object onto the fourth conveyor line 123. Finally, the fourth conveyor line 123 outputs the target object picked by the outbound workstation 121 out of the outbound area 120 for outbound.

It may be understood that outputting the target object to the outbound area 120 via the fourth conveyor line 123 saves labor costs and reduces the movement range of the transport device, reducing the correlation between the layout of movement routes in the warehousing system and the inbound/outbound efficiency. Thus, the inbound and outbound efficiency of cargo may be improved.

It should be noted that when the target object is a container containing cargo or a bin containing cargo, the first conveyor line 112 and the fourth conveyor line 123 may be configured to convey the cargo. In this case, when the first conveyor line 112 conveys the cargo to the inbound workstation 111, the inbound workstation 111 picks the cargo to place it in the target object, and then places the target object on the first conveyor line 112. When the second conveyor line 122 conveys the target object to be outbound to the outbound workstation 121, the outbound workstation 121 picks the cargo from the target object and places the picked cargo on the fourth conveyor line 123. The end of the fourth conveyor line 123 not docked with the outbound workstation 121 may be docked with a truck, a carrier 131, or a cargo box, etc.

In some embodiments, conveyor lines are arranged at a same height, or are arranged in a stagger manner at different heights; the conveyor lines include at least one of the first conveyor line 112, the second conveyor line 122, the third conveyor line 113, or the fourth conveyor line 123.

As shown in FIG. 4, assume the conveyor lines are first conveyor lines, and the first conveyor lines include four conveyor lines, namely conveyor line 41, conveyor line 42, conveyor line 43, and conveyor line 44. Conveyor line 41 and conveyor line 42 are arranged at the same height, and conveyor line 43 and conveyor line 44 are arranged at the same height; conveyor line 41 and conveyor line 43 are arranged in a stagger manner at different heights, and conveyor line 42 and conveyor line 44 are arranged in a stagger manner at different heights.

In some embodiments, each of the plurality of conveyor lines may respectively convey the container to a different station (e.g., inbound workstation, outbound workstation), or at least two of the plurality of conveyor lines may convey different containers to the same station. For example, at least two of the plurality of conveyor lines may merge into the same conveyor line to convey their respective containers to the same station.

In some embodiments, merging a plurality of conveyor lines into one conveyor line may include: the plurality of conveyor lines may all merge into any one of the plurality of conveyor lines, or the plurality of conveyor lines may all merge into a designated conveyor line, which is not limited in embodiments of the present disclosure. In some examples, when a plurality of conveyor lines merge into one conveyor line, the merging may occur at any position of that conveyor line.

FIG. 7 is a schematic diagram of an inbound area according to an embodiment of the present disclosure. As shown in FIG. 7, the inbound area 110 includes three first conveyor lines docked with an inbound workstation S1, namely conveyor line 45, conveyor line 46, and conveyor line 47. Conveyor line 45 and conveyor line 46 merge into the same conveyor line, for example, conveyor line 45 and conveyor line 46 both merge into conveyor line 45, so that conveyor line 45 and conveyor line 46 may respectively convey their containers to the inventory area 130 (not shown in FIG. 7); conveyor line 47 conveys the container to the inventory area 130.

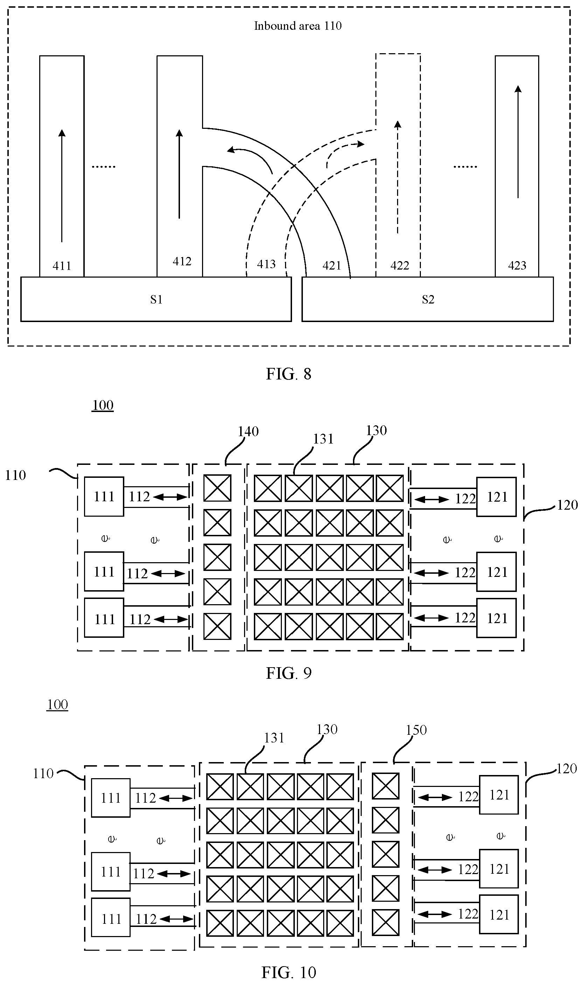

FIG. 8 is a schematic diagram of another inbound area according to an embodiment of the present disclosure. As shown in FIG. 8, the inbound area 110 includes a plurality of first conveyor lines, namely: conveyor line 411, conveyor line 412, conveyor line 413, conveyor line 421, conveyor line 422, and conveyor line 423. Conveyor line 411, conveyor line 412, and conveyor line 413 are docked with an inbound workstation S1; conveyor line 421, conveyor line 422, and conveyor line 423 are docked with an inbound workstation S2.

Conveyor line 411 and conveyor line 412 in the inbound workstation S1 are arranged in a stagger manner with conveyor line 413 at different heights; for example, conveyor line 411 and conveyor line 412 are arranged on an upper layer (indicated by solid lines in FIG. 8), and conveyor line 413 is arranged on a lower layer below conveyor line 411 and conveyor line 412 (indicated by dashed lines in FIG. 8). Conveyor line 421 and conveyor line 423 in the inbound workstation S2 are arranged in a stagger manner with conveyor line 422 at different heights; for example, conveyor line 421 and conveyor line 423 are arranged on an upper layer, and conveyor line 422 is arranged on a lower layer below conveyor line 421 and conveyor line 423.

For example, conveyor line 412 in the inbound workstation S1 and conveyor line 421 in the inbound workstation S2 merge into one conveyor line, such as conveyor line 412; conveyor line 413 in the inbound workstation S1 and conveyor line 422 in the inbound workstation S2 merge into one conveyor line, such as conveyor line 422.

In some embodiments, the transport device is further configured to transport the target object conveyed by the at least one first conveyor line to a carrier having an idle placement position in the inventory area, or to a first target carrier in the inventory area; in which the first target carrier stores a cargo having the same attribute as the target object.

For example, the carrier having an idle placement position may be any carrier in the inventory area, and the cargo stored on the carrier may have the same attribute as the target object or a different attribute, which is not limited in embodiments of the present disclosure.

To improve the subsequent outbound efficiency of target objects, the transport device may also transport the target object conveyed by the at least one first conveyor line to an idle placement position on a first target carrier that stores a target object having the same attribute as the target object, achieving targeted shelving.

In some embodiments, the transport device is further configured to transport a target object having a cargo popularity greater than or equal to a first popularity threshold to a second target carrier in the inventory area; in which the second target carrier is any carrier in the inventory area.

For example, the cargo popularity is used to indicate the frequency of picking and placing the cargo or the demand for the cargo. For example, the higher the demand for the cargo, the higher the cargo popularity of the cargo; the lower the demand for the cargo, the lower the cargo popularity of the cargo. The first popularity threshold is a preset value, which may be preset according to the frequency of picking and placing the cargo or the demand for the cargo. The transport device may transport a target object having a cargo popularity greater than or equal to the first popularity threshold to a second target carrier in the inventory area, and place the target object in an idle placement position on the second target carrier.

To improve the subsequent outbound efficiency of target objects, in some embodiments, the transport device is further configured to transport a target object having a higher cargo popularity to a carrier closer to the outbound area, or transport a target object having a cargo popularity greater than or equal to a second popularity threshold to a third target carrier in the inventory area; in which a distance between the third target carrier and the outbound area is less than or equal to a first preset distance.

For example, the transport device may, during idle time (e.g., from 0:00 to 5:00 am), transport a target object having a higher cargo popularity to a carrier closer to the outbound area, or transport a target object having a cargo popularity greater than or equal to the second popularity threshold to a third target carrier in the inventory area, and place the target object in an idle placement position on the third target carrier.

In some embodiments, when the transport device transports multiple target objects, it may sequentially transport each target object to a corresponding carrier or the third target carrier according to the cargo popularity of each target object among the multiple target objects.

For example, assume a distance between carrier A and the outbound area is smaller than a distance between carrier B and the outbound area, and the distance between carrier B and the outbound area is smaller than a distance between carrier C and the outbound area. If the transport device transports three target objects: target object 1, target object 2, and target object 3; the cargo popularity of target object 1 is higher than the cargo popularity of target object 2, and the cargo popularity of target object 2 is higher than the cargo popularity of target object 3; then the transport device transports target object 1 to an idle placement position on carrier A; then, the transport device transports target object 2 to an idle placement position on carrier B; finally, the transport device transports target object 3 to an idle placement position on carrier C.

In some embodiments, when the transport device transports multiple target objects, the multiple target objects may be stacked on the transport device or placed horizontally on the transport device. When multiple target objects are stacked on the transport device, each target may be sequentially transported to a corresponding carrier or the third target carrier according to the stacking position of each target object on the transport device. For example, the higher the stacking position of the target object on the transport device, the earlier the transport device places the target object on the corresponding target object. When multiple target objects are placed horizontally on the transport device, each target object may be sequentially transported to a corresponding carrier or the third target carrier according to the order in which the transport device obtains the multiple target objects. For example, the later the target object is obtained, the earlier the transport device places the target object on the corresponding target object. Embodiments of the present disclosure do not limit the manner in which multiple target objects are placed on the transport device and the order in which the transport device transports each target object to an idle placement position on a carrier. In the following embodiments, description will be given by taking an example in which multiple target objects are stacked on the transport device and the transport device transports the target objects to a carrier according to the stacking positions of the multiple target objects on the device.

For example, assume the transport device transports three target objects: target object 4, target object 5, and target object 6; target object 5 is stacked above target object 4, and target object 4 is stacked above target object 6; the cargo popularity of target object 4 is higher than the cargo popularity of target object 5, and the cargo popularity of target object 5 is higher than the cargo popularity of target object 6; a distance between carrier D and the outbound area is smaller than a distance between carrier E and the outbound area, and the distance between carrier E and the outbound area is smaller than a distance between carrier F and the outbound area. Then the transport device first transports target object 5 to an idle placement position on carrier E; then, the transport device transports target object 4 to an idle placement position on carrier D; finally, the transport device transports target object 6 to an idle placement position on carrier F.

In some embodiments, the cargo popularities of target objects placed on the same carrier may be the same or different. For example, when the number of target objects having the same cargo popularity is less than a preset target object number, target objects having different cargo popularities may be placed on the same carrier.

It should be noted that the second popularity threshold is a preset value. The second popularity threshold may be equal to the first popularity threshold or different from the first popularity threshold, which is not limited in embodiments of the present disclosure.

To improve the subsequent outbound efficiency of target objects, in some embodiments, the transport device is further configured to transport a carrier in the inventory area, transport a carrier having a higher carrier popularity to a storage position closer to the outbound area, or transport a carrier having a carrier popularity greater than or equal to a third popularity threshold to a first target area in the inventory area; in which a distance between the first target area and the outbound area is less than or equal to a second preset distance.

For example, in an outbound scenario, the hit rate of cargo may be determined based on order information, and then the carrier popularity for each carrier may be determined based on the hit rate of cargo. That is, in the outbound scenario, the carrier popularity is used to indicate the hit rate of cargo stored on the carrier. For example, the higher the hit rate of cargo stored on the carrier, the higher the carrier popularity of the carrier; the lower the hit rate of cargo stored on the carrier, the lower the carrier popularity of the carrier. The third popularity threshold is a preset value, which may be preset according to the hit rate of cargo stored on the carrier.

In some embodiments, the carrier popularity within the same time period may be adjusted based on order information (e.g., cargo hit rate). For example, a carrier storing cargo A may have a high hit rate in the current time period, i.e., the carrier popularity of the carrier storing cargo A is high; however, if an order B is obtained and order B indicates that cargo B needs to be outbound, then the carrier popularity of the carrier storing cargo B may be increased and/or the carrier popularity of the carrier storing cargo A may be decreased, so that the carrier popularity of the carrier storing cargo B becomes higher than the carrier popularity of the carrier storing cargo A.

In some embodiments, the transport device may, during idle time (e.g., from 0:00 to 5:00 am), transport a carrier having a higher carrier popularity to a storage position closer to the outbound area; or transport a carrier having a carrier popularity greater than or equal to the third popularity threshold to a target area whose distance to the outbound area is less than or equal to a second preset distance. In this way, cargo handling is performed during idle time, improving the inbound and outbound efficiency of cargo.

To improve the inbound efficiency of target objects, in some embodiments, the transport device is further configured to transport a carrier in the inventory area, transport a carrier having a higher carrier popularity to a storage position closer to the inbound area, or transport a carrier having a carrier popularity greater than or equal to a fourth popularity threshold to a second target area in the inventory area; in which a distance between the second target area and the inbound area is less than or equal to a third preset distance.

For example, in an inbound scenario, the carrier popularity is used to indicate the number of idle placement positions on the carrier. For example, the more idle placement positions on the carrier, the higher the carrier popularity of the carrier; the fewer idle placement positions on the carrier, the lower the carrier popularity of the carrier. The fourth popularity threshold is a preset value, which may be preset according to the number of placement positions on the carrier.

In some embodiments, the transport device is further configured to, based on at least one preset time period, transport a target object corresponding to each preset time period in the inventory area to a fourth target carrier in the inventory area, or transport a fifth target carrier corresponding to each preset time period in the inventory area to a third target area in the inventory area; in which a distance between the fourth target carrier and the outbound area is less than or equal to a third preset distance, and a distance between the third target area and the outbound area is less than or equal to a fourth preset distance.

For example, in an outbound scenario, target objects or carriers may be transported in different time periods. For example, in a first time period, target object A may be transported to a fourth target carrier in the inventory area, or a fifth target carrier carrying target object A may be transported to a third target area in the inventory area; in a second time period, target object B may be transported to the fourth target carrier in the inventory area, or a fifth target carrier carrying target object B may be transported to the third target area in the inventory area. The first time period and the second time period are different time periods, and the first time period and the second time period may be adjacent.

In some embodiments, if the target objects transported in the current time period and the previous time period are different, and there is no idle placement position on the fourth target carrier in the current time period or the number of idle placement positions is less than the number of target objects to be transported to the fourth target carrier, then the target objects corresponding to the previous time period placed on the fourth target carrier may be moved to another carrier, and the target objects corresponding to the current time period may be transported to idle placement positions on the fourth target carrier.

For example, taking target object A transported in the first time period and target object B transported in the second time period, if in the second time period the fourth target carrier carries target object A corresponding to the first time period, then target object A may be first transported to an idle placement position on another carrier, and then target object B corresponding to the second time period may be transported to the fourth target carrier in the inventory area.

Similarly, if the carriers transported in the current time period and the previous time period are different, and there is no idle storage position in the third target area in the inventory area in the current time period, then the carrier already stored in the third target area in the inventory area may be moved to another area, and the fifth target carrier corresponding to the current time period may be transported to the third target area in the inventory area.

It should be noted that the time unit of the preset time period may be minute, hour, day, week, month, or year, which is not limited in embodiments of the present disclosure. The first preset distance, the second preset distance, the third preset distance, and the fourth preset distance are all preset values. The first preset distance, the second preset distance, the third preset distance, and the fourth preset distance may be determined according to the size of the inventory area, or may be determined according to the number and specifications of carriers. At least two of the first preset distance, the second preset distance, the third preset distance, and the fourth preset distance may be equal or different, which is not limited in embodiments of the present disclosure.

In some embodiments, the transport device is further configured to transport a carrier having a number of idle placement positions less than or equal to a preset threshold in the inventory area, and transport a carrier having a smaller number of idle placement positions to a storage position closer to the outbound area.

For example, the more idle placement positions on a carrier, the more target objects to be inbound the carrier may hold. Therefore, transporting a carrier having more idle placement positions to a position closer to the inbound area may shorten the distance for the transport device to transport target objects from the first conveyor line in the inbound area to the carrier in the inventory area, improving the inbound efficiency of cargo. The fewer idle placement positions on a carrier, the more target objects to be outbound are on the carrier. Therefore, when a carrier having fewer idle placement positions is transported to a position closer to the outbound area, the distance for the transport device to transport target objects from the inventory area to the second conveyor line is shortened, which may improve the outbound efficiency of cargo.

In some embodiments, the warehousing system provided by embodiments of the present disclosure further includes: a first information identifying device arranged on a target workstation or on one or more second conveyor lines or on one or more third conveyor lines. The first information identifying device is configured to detect information of the target object; the target workstation includes an inbound workstation and/or an outbound workstation; the target workstation is configured to, according to the information of the target object, pick the target object to be inbound to one or more corresponding first conveyor lines, or pick the target object to be outbound to one or more corresponding fourth conveyor lines.

For example, the first information identifying device may be a camera, a scanner, or other device capable of scanning the target object to identify identification information on the target object (e.g., a barcode on the outer packaging of the cargo). The first information identifying device detects the information of the target object by identifying the identification information on the target object. The information of the target object detected by the first information identifying device includes the attribute of the target object, the type of the target object, the cargo popularity of the target object, etc., so that the inbound workstation may, according to the information of the target object, pick the target object to be inbound to the corresponding first conveyor line, or the outbound workstation may pick the target object to be outbound to the corresponding fourth conveyor line.

In some embodiments, the warehousing system provided by embodiments of the present disclosure further includes: a second information identifying device arranged on the transport device. The second information identifying device is configured to detect information of the target object; the transport device is configured to, according to the information of the target object, transport the target object to a target placement position in the inventory area.

For example, the first information identifying device and the second information identifying device may be the same or different, which is not limited in embodiments of the present disclosure.

In some embodiments, the second information identifying device detects the information of the target object by identifying identification information on the target object. The information of the target object detected by the second information identifying device may be the same as or different from the information of the target object detected by the first information identifying device, which is not limited in embodiments of the present disclosure. In the following embodiments, description will be given by taking an example in which the information of the target object detected by the second information identifying device is different from the information of the target object detected by the first information identifying device.

For example, the information of the target object detected by the second information identifying device includes a target placement position corresponding to the target object, etc., so that the transport device may, according to the information of the target object, transport the target object to the target placement position in the inventory area.

As shown in FIG. 9, in some embodiments, the warehousing system 100 provided by embodiments of the present disclosure further includes: at least one first buffer area 140, in which the first buffer area 140 is arranged between the inbound area 110 and the inventory area 130, and the first buffer area 140 is configured to place a carrier 131 not carrying the target object.

For example, two first buffer areas 140 are arranged between the inbound area 110 and the inventory area 130: buffer area 1 and buffer area 2. Buffer area 1 and buffer area 2 are both configured to place carriers 131 not carrying target objects. Thus, when the number of target objects to be inbound is greater than the number of idle placement positions on the carrier 131 in the inventory area 130, or when the number of target objects to be inbound is greater than the current transport capacity of the transport device, the target objects to be inbound may be temporarily stored on the carriers 131 in buffer area 1 and/or buffer area 2.

As shown in FIG. 10, in some embodiments, the warehousing system 100 provided by embodiments of the present disclosure further includes: at least one second buffer area 150, in which the second buffer area 150 is arranged between the inventory area 130 and the outbound area 120, and the second buffer area 150 is configured to place a carrier having a carrier popularity greater than or equal to a third popularity threshold, and/or place a carrier having no idle placement position.

For example, one second buffer area 150 is arranged between the inbound area 110 and the inventory area 130: buffer area 3. Buffer area 3 is configured to place carriers 131 having no idle placement position. Thus, when the number of target objects to be outbound is greater than the transport capacity of the second conveyor line 122, or greater than the picking upper limit of the outbound workstation 121, the target objects to be outbound may be placed on carriers 131, and the carriers 131 carrying the target objects to be outbound (carriers 131 having no idle placement position) may be placed in buffer area 3.

The various technical features of the above embodiments may be combined arbitrarily. To make the description concise, not all possible combinations of the various technical features in the above embodiments are described. However, as long as there is no contradiction in the combination of these technical features, they should be considered as within the scope of the present description.

The above embodiments merely express several implementations of the present disclosure, and their descriptions are specific and detailed, but they should not be construed as limiting the scope of the present disclosure. It should be noted that, for those of ordinary skill in the art, several variations and improvements may be made without departing from the concept of the present disclosure, and these fall within the protection scope of the present disclosure. Therefore, the protection scope of the present disclosure should be subject to the appended claims.

## Claims

1. A warehousing system, comprising:
an inbound area comprising at least one inbound workstation and at least one first conveyor line, each first conveyor line being docked with a side of one or more inbound workstations, wherein each inbound workstation is configured to pick a target object to be inbound to one or more corresponding first conveyor lines, and each first conveyor line is configured to convey the target object picked by one or more corresponding inbound workstations, to inbound the target object;
an outbound area comprising at least one outbound workstation and at least one second conveyor line, each second conveyor line being docked with a side of one or more outbound workstations, wherein each second conveyor line is configured to convey a target object to be outbound to one or more corresponding outbound workstations, and each outbound workstation is configured to pick the target object for outbound;
an inventory area configured to place a carrier, wherein the carrier comprises a placement position configured to place the target object; and
a transport device configured to transport the target object conveyed by the at least one first conveyor line and/or the carrier carrying the target object to the inventory area, or transport the target object in the inventory area and/or the carrier carrying the target object to the at least one second conveyor line.

2. The warehousing system according to claim 1, wherein the inbound area further comprises at least one third conveyor line; and
each third conveyor line is docked with another side of one or more inbound workstations, and each third conveyor line is configured to convey the target object to be inbound to one or more corresponding inbound workstations for picking and inbound.

3. The warehousing system according to claim 2, wherein the outbound area further comprises at least one fourth conveyor line; and
each fourth conveyor line is docked with another side of one or more outbound workstations, and each fourth conveyor line is configured to convey the target object picked by one or more corresponding outbound workstations, to outbound the target object.

4. The warehousing system according to any one of claims 1-3, wherein the transport device is further configured to transport the target object conveyed by the at least one first conveyor line to a carrier having an idle placement position in the inventory area, or to a first target carrier in the inventory area; wherein the first target carrier stores a cargo having a same attribute as the target object.

5. The warehousing system according to any one of claims 1-3, wherein the transport device is further configured to transport a target object having a cargo popularity greater than or equal to a first popularity threshold to a second target carrier in the inventory area; wherein the second target carrier is any carrier in the inventory area.

6. The warehousing system according to any one of claims 1-3, wherein the transport device is further configured to transport a target object having a higher cargo popularity to a carrier closer to the outbound area, or transport a target object having a cargo popularity greater than or equal to a second popularity threshold to a third target carrier in the inventory area; wherein a distance between the third target carrier and the outbound area is less than or equal to a first preset distance.

7. The warehousing system according to any one of claims 1-3, wherein the transport device is further configured to transport a carrier in the inventory area, transport a carrier having a higher carrier popularity to a storage position closer to the outbound area, or transport a carrier having a carrier popularity greater than or equal to a third popularity threshold to a first target area in the inventory area; wherein a distance between the first target area and the outbound area is less than or equal to a second preset distance.

8. The warehousing system according to any one of claims 1-3, wherein the transport device is further configured to transport a carrier in the inventory area, transport a carrier having a higher carrier popularity to a storage position closer to the inbound area, or transport a carrier having a carrier popularity greater than or equal to a fourth popularity threshold to a second target area in the inventory area; wherein a distance between the second target area and the inbound area is less than or equal to a third preset distance.

9. The warehousing system according to any one of claims 1-3, wherein the transport device is further configured to, based on at least one preset time period, transport a target object corresponding to each preset time period in the inventory area to a fourth target carrier in the inventory area, or transport a fifth target carrier corresponding to each preset time period in the inventory area to a third target area in the inventory area; wherein a distance between the fourth target carrier and the outbound area is less than or equal to a third preset distance, and a distance between the third target area and the outbound area is less than or equal to a fourth preset distance.

10. The warehousing system according to any one of claims 1-3, wherein the transport device is further configured to transport a carrier having a number of idle placement positions less than or equal to a preset threshold in the inventory area, and transport a carrier having a smaller number of idle placement positions to a storage position closer to the outbound area.

11. The warehousing system according to claim 1, wherein each inbound workstation comprises at least one inbound buffer position; and
each inbound workstation is configured to temporarily store the target object in one or more inbound buffer positions, and in a case where the target object in the one or more inbound buffer positions satisfies a preset condition, inbound the target object temporarily stored on the one or more inbound buffer positions.

12. The warehousing system according to claim 1, wherein each outbound workstation comprises at least one outbound buffer position; and
each outbound workstation is configured to temporarily store the target object in one or more outbound buffer positions, and in a case where the target object in the one or more outbound buffer positions satisfies a preset condition, outbound the target object temporarily stored on the one or more outbound buffer positions.

13. The warehousing system according to claim 11 or 12, wherein the preset condition comprises that a number of target objects having a same attribute among the target objects is greater than or equal to a preset number, or that the target object matches a target object required by an order.

14. The warehousing system according to claim 3, further comprising: a first information identifying device arranged on a target workstation or on one or more second conveyor lines or on one or more third conveyor lines;
the first information identifying device is configured to detect information of the target object; the target workstation comprises an inbound workstation and/or an outbound workstation; and
the target workstation is configured to, according to the information of the target object, pick the target object to be inbound to one or more corresponding first conveyor lines, or pick the target object to be outbound to one or more corresponding fourth conveyor lines.

15. The warehousing system according to claim 3, wherein conveyor lines are arranged at a same height, or are arranged in a stagger manner at different heights; the conveyor lines comprise at least one of the first conveyor line, the second conveyor line, the third conveyor line, or the fourth conveyor line.

16. The warehousing system according to any one of claims 1-3, further comprising: a second information identifying device arranged on the transport device;
the second information identifying device is configured to detect information of the target object; and
the transport device is configured to, according to the information of the target object, transport the target object to a target placement position in the inventory area.

17. The warehousing system according to any one of claims 1-3, further comprising:
at least one first buffer area, wherein the first buffer area is arranged between the inbound area and the inventory area, and the first buffer area is configured to place a carrier not carrying the target object.

18. The warehousing system according to any one of claims 1-3, further comprising:
at least one second buffer area, wherein the second buffer area is arranged between the inventory area and the outbound area, and the second buffer area is configured to place a carrier having a carrier popularity greater than or equal to a third popularity threshold, and/or place a carrier having no idle placement position.

19. The warehousing system according to any one of claims 1-3, wherein the inbound area and the outbound area are oppositely arranged on two sides of the inventory area, or the inbound area and the outbound area are respectively arranged in different areas on a same side of the inventory area.
